# EUROPEAN PATENT APPLICATION

(11) **EP 4 567 586 A1**
(43) Date of publication of application: **11.06.2025**
(21) Application number: 23214886.6
(22) Date of filing: 07.12.2023
(51) Int. Cl.: G06F 8/60, G06F 21/10, G06F 21/60, G06F 21/64

(54) **CONTROLLING ACCESS TO AND REPLICATION OF PACKAGES**

(71) Applicant: SAP SE, 69190 Walldorf (DE)
(72) Inventor: MADINIER, Alexis, 69190 Walldorf (DE); LUTTER, Steffen, 69190 Walldorf (DE); XUE, Xiaohui, 69190 Walldorf (DE)
(74) Representative: Müller-Boré & Partner Patentanwälte PartG mbB

(57) **Abstract**

According to an aspect, a computer implemented method, a computer program and a computer system for controlling access to and replication of packages are provided. The computer implemented method comprises creating a first package at a first region of a plurality of regions, wherein the plurality of regions is communicatively connected via a computer network. The first package includes at least one binary file and manifest for the at least one binary file. The method further comprises replicating, using the manifest, the first package from the first region to a second region of the plurality of regions. The replicating comprises using the manifest to determine dependencies of the at least one binary file. The method further comprises publishing the first package to the second region. The publishing comprises making the at least one binary file of the first package available at the second region and displaying a description of the at least one binary file according to the manifest at the second region.

## Description

The technical field is the digital distribution of software applications. A digital distribution platform may be used to distribute packages. Each of the packages may include one or more software applications. The digital distribution platform may provide an interface for a user to browse, search, select, and download one or more of the software applications. One or more of the software applications may be capable of interacting with an enterprise resource planning (ERP) system, e.g., via an application programming interface (API) of the enterprise resource planning system.

Conventionally, a digital distribution platform may operate so that each user accessing the digital distribution platform receives the same view of the digital distribution platform. Moreover, the digital distribution platform may operate in a centralized way. However, it may be desirable to make different software applications available to different users, e.g., it may be desirable to make a first set of software applications available to users in a first region and to make a second set of software applications available to users in a second region, wherein the first set of software applications differs from the second set of software applications. In addition, a conventional distribution platform may only provide software for a specified operating system or computing environment. Furthermore, a conventional distribution platform may only provide software as a self-contained unit, e.g., without considering dependencies of the software. However, it may be desirable to provide a distribution platform capable of distributing software to multiple operating systems and computing environments and/or a distribution platform that facilitates consideration of dependencies. Considering dependencies may facilitate the provision of small executable software applications and save distribution bandwidth by allowing applications to share functionality provided by common dependencies.

In addition or alternatively, it may be desirable to distribute software applications from different regions independently, i.e., to distribute software applications from one region of a plurality of regions independently of other regions of the plurality of regions.

In addition or alternatively, it may be desirable to ensure that there is no single point of failure.

In some cases, it may be desirable to provide flexible access control. For example, it may be desirable to isolate one region of the plurality of regions from other regions of the plurality of regions and/or to ensure that when software applications are distributed, the software applications can only be used in authorized regions. For example, if a software application is distributed to an unauthorized region in which the software application is not authorized to be used, it may be desirable to ensure that the software application cannot be used in the unauthorized region.

According to a first aspect, a computer-implemented method for controlling access to and replication of packages is provided. The method comprises creating a first package at a first region of a plurality of regions, wherein the plurality of regions is communicatively connected via a computer network. The first package includes at least one binary file and a manifest for the at least one binary file. The method further comprises replicating, using the manifest, the first package from the first region to a second region of the plurality of regions, the replicating comprising using the manifest to determine dependencies of the at least one binary file. The method further comprises publishing the first package to the second region, the publishing comprising making the at least one binary file available at the second region and displaying a description of the at least one binary file according to the manifest at the second region. If determined dependencies of the at least one binary file are not already present on a respective computing device of the second region, missing dependencies may be fetched, e.g., from a local repository or a repository of the first region.

Creating (e.g., building or producing) the first package at the first region of the plurality of regions may include receiving user input via a package management software user interface and/or storing the first package on a computing device of the first region. Creating the first package at the first region of the plurality of regions may include receiving metadata (e.g., a name of the first package, a description of the first package, a summary of package functionality, a last modification date) and/or the at least one binary file, which may include sample data and usage instructions (see e.g., a readme file). At least a portion of the metadata may be included in the manifest. In addition or alternatively, the manifest may be replicated with additional package metadata.

The method may further comprise publishing the first package to the first region. The publishing may include making the at least one binary file of the first package available at the first region and displaying the description of the at least one binary file according to the manifest at the first region. Making the at least one binary file of the first package available at the first region may comprise providing an interface at the first region so that the at least one binary file can be accessed and/or downloaded by at least one computing device of the first region.

The plurality of regions may be communicatively connected via the computer network in the sense that the first region is connected to the other regions of the plurality of regions via the computer network and/or each region of the plurality of regions is communicatively connected to every other region of the plurality of regions via the computer network. Hence, the computer network enables two-way communication among regions of the plurality of regions. The Transmission Control Protocol/Internet Protocol (TCP/IP) may be used for communication on the computer network. The regions may be referred to as landscapes.

The replicating of the first package from the first region to the second region of the plurality of regions may include determining, at the second region, the dependencies of the at least one binary file determined using the manifest. The dependencies in the manifest may be structured as a graph or a tree. Dependencies may be determined in various ways, e.g., a depth first search or a breadth first search. Accordingly, the depth first search may start with a root node of the graph or tree and explore as far as possible along each branch before backtracking. The root node may be an arbitrary node in the case of the graph. The breadth first search may start at a root node and explore all nodes at the present depth prior to moving to nodes at another depth level.

Determining and using dependencies may facilitate the provision of relatively small packages and save distribution bandwidth by allowing packages to share functionality provided by common dependencies. In this context, using dependencies may be contrasted with a self-contained package, which may be distributed independently of dependencies.

Making the at least one binary file available at the second region may comprise providing an interface at the second region so that the at least one binary file can be accessed and/or downloaded by at least one computing device of the second region.

Displaying the description of the at least one binary file according to the manifest at the second region may comprise determining a name, textual description and activation status of the at least one binary file from the manifest and displaying the determined items, i.e., displaying the name, the textual description and the activation status on a computing device of the second region. Displaying the description of the at least one binary file according to the manifest at the second region may further comprise determining tasks (e.g., automation tasks) carried out by the at least one binary file, a datatype of the output of the at least one binary file, and dependencies of the at least one binary file from the manifest and displaying the determined items.

The datatype of the output may refer to a data structure. The data structure may comprise a status and data. The status may have a type of string and the data may be of any type. The status may provide an indication regarding a result of processing carried out by the at least one binary file. The data of the data structure may be data extracted from a document processed by the at least one binary file. For example, the datatype of the output may be doxResult.

In addition to doxResult, another exemplary datatype is "Address", wherein the Address datatype may include a house number, street, zip code, city and country. The datatype may also contain another datatype. For example, a "Person" datatype could contain fields "first name", "last name" and "address", where the "address" filed has the "Address" data type.

The package (e.g., the first package) may include one or more artifacts. The term "artifact" may refer to a component of a package. An artifact may include one or more of the following: at least one file, at least one automation task, at least one datatype. The package may be a software package.

Advantageously, once a package (e.g., the first package) has been created and published to a region (e.g., the first region or the second region), the package can be efficiently replicated and published to further regions. Moreover, flexible control is provided over which region or regions the package is published to. For example, a user interface for package management may be provided in order to control regions to which the package should be published. In this way, packages created at a computing device of the first region may be replicated and published to the second region. By means of the manifest the second region may determine package dependencies (e.g., determine dependencies of the first package) and publish packages (see e.g., publish the first package) created at the first region independently of the first region.

This decentralized approach enables the second region to make packages from the first region available without being dependent on the first region. For example, if computer network connectivity between the first region and the second region is lost, computing devices in the second region may still be able to access packages created in the first region (e.g., the first package).

In some cases, each of the plurality of regions includes one or more computing devices. The one or more computing devices may include at least one of the following: a server, a client, a database. For example, a computing device be the server, the computing device may be the client, or the computing device may be the server and the database (e.g., the server hosting the database). The computer network may be a wide area network. The computer network may be a peer-to-peer network.

The wide area network (WAN) may be contrasted with a local area network (LAN). In particular, when packets travel over the WAN, there may be greater network latency than when the packets travel over the LAN. For example, the round-trip transmission time (RTT) over the LAN may be less than 10 milliseconds (ms), while the RTT for the WAN may be greater than 10 ms (e.g., more than three times the LAN RTT, or more than five times the LAN RTT). In some cases, the WAN RTT may be over 100 ms or over 250 ms.

The WAN may include one or more of the following: a part of the internet, a virtual private network (e.g., extending a private network across a public network), multiple (e.g., more than 3) subnets. Communications on the WAN may pass through at least one router (e.g., device at the network layer of the open systems interconnection - OSI model). The LAN may have one or more of the following characteristics:
- the LAN is a single subnet (possibly using non-routable IP addresses, such as an address in the range of 10.0.0.0-10.255.255.255) or no more than 3 subnets,
- the LAN does not include a part of the internet,
- the LAN includes at least one network switch (e.g., a device at the data link layer of the OSI model),
- the LAN does not include a router (e.g., device at the network layer of the OSI model),
- the LAN does not include a virtual private network.

The WAN and LAN may also use different protocols. For example, the LAN may use one or more of the following: Wi-Fi (IEEE 802.11), Ethernet (IEEE 802.3), Token Ring (IEEE 802.5), Fiber Distributed Data Interface (FDDI). The WAN may use one or more of the following: cell relay (e.g., asynchronous transfer mode), digital subscriber line (DSL), Ethernet (e.g., gigabit Ethernet). Communications over the WAN may include Fiber-optic communication.

In addition to the RTT, packet loss or errors may be problematic. For example, if a packet gets lost, the packet has to be resent, which takes time. The probability of such an issue increases with the number of hops between a sender and a receiver, and the number of hops often increases with distance.

The peer-to-peer network may be contrasted with a client/server network. Regions connected by the computer network may be equally privileged, equipotent participants in the network. Accordingly, each region of the plurality of regions may replicate packages to other regions of the plurality of regions. Alternatively, one or more of the regions of the plurality of regions may only be configured to receive packages replicated from other regions and might not be configured to replicate packages.

The at least one binary file may include non-printable characters. The at least one binary file may include an archive file and/or a compressed file. For example, the binary file may include a zip file containing one or more files and/or directories that have been compressed.

The manifest may be in a data serialization format. The data serialization format may be one of the following: JavaScript Object Notation (JSON), PHP: Hypertext Preprocessor (PHP) serialization format, extensible markup language (XML).

The archive file and/or the compressed file may be a computer file including one or more additional files along with metadata. The archive file and/or the compressed file may be used to collect multiple files together into a single file. The archive file may support compression, e.g., encoding information using fewer bits than the original representation. The compression of the archive file and/or the compressed file may be lossless and/or reversible.

The at least one binary file may include one or more formatted document files (e.g., Microsoft Excel, Microsoft Word or portable document format) and/or one or more unformatted document files, e.g., plain text files, e.g., as part of the archive file or the compressed file.
Each region may include on-premises and/or cloud-based storage (e.g., storage in a cloud computing environment, as explained in more detail below). The contents of the binary file may be stored in on-premises and/or cloud-based storage. When the contents of the binary file are stored in cloud-based storage, multiple different cloud-based storage services (i.e., storage services provided by different cloud-based service providers) may be used. For example, different regions may use different cloud-based storage services/service-providers (examples of cloud-based storage services and cloud-based storage service providers are given below), depending on their locations.

The manifest may comprise a plurality of dependencies of the first package. The plurality of dependencies may comprise one or more direct dependencies of the first package and/or one or more indirect dependencies of the first package. The manifest may further comprise one or more of the following: a package identifier of the first package, a region identifier identifying the region where the first package was created and a status of the first package. The package identifier may be a package unique identifier, i.e., package UID. The package identifier may identify a dependency of the first package. More generally, package identifiers may identify respective dependencies of the first package.

The manifest may provide a means for representing the content of the at least one binary file via a user interface, e.g., a client user interface. For example, a software application may be capable of processing the manifest to determine the content of the at least one binary file and displaying the content via the client user interface.

The plurality of dependencies of the first package may include the dependencies of the at least one binary file. More specifically, the plurality of dependencies of the first package may be the dependencies of the at least one binary file or dependencies of an executable file of the at least one binary file.

In some cases, the replicating comprises digitally signing the first package using a digital signature, when digitally signing the first package may comprise cryptographically signing first package.

More specifically, asymmetric cryptography (e.g., public-key cryptography) may be used when digitally signing the first package. For example, the Rivest-Shamir-Adleman (RSA) public-key cryptosystem may be used to digitally sign the first package and/or to create the digital signature. The digital signature may provide a secure indication of the source (e.g., the first region) of the first package.

In some cases, digitally signing the first package comprises signing the first package using a private key of the first region. More specifically, the private key of the first region may be maintained and/or stored at the first region. The same private key of the first region may be used to digitally sign each package created in the first region. Alternatively, each package may have a separately generated and unique private key that is used to sign the respective package. The private key of the first region may be a secret key.

Each region of the plurality of regions may store a private key of the region for signing each package created at the respective region. The private key of the region may be part of a corresponding public-private key pair, where the public-private key pair includes the private key of the region and a corresponding public key of the region.

In some cases, it is not possible (e.g., a package management application restricts access) to access packages created at a region without using a public key of the region to verify the digital signatures of the respective packages. Accordingly, the public key of the region can be distributed to regions that have been granted access to packages from the region (e.g., the first package) and withheld from regions that have not been granted access to packages from the region. In this way, the public key of a region can be used to restrict access to packages created at the region.

The plurality of regions may comprise a receive-only region. The method may further comprise creating a second package at the receive-only region, and digitally signing the second package using a private key of the receive-only region. The method may further comprise preventing the receive-only region from replicating the second package to the first region.

The receive-only region may be configured such that packages can be received from other regions of the plurality of regions at the receive-only region but packages cannot be sent to other regions of the plurality of regions from the receive-only region.

Preventing the receive-only region from replicating the second package to the first region may comprise preventing the receive-only region from transmitting a public-key of the receive-only region to the first region. The public key of the receive-only region may correspond to the private key of the receive-only region. More specifically, the public-key of the receive-only region and the private key of the receive-only region may be part of a key pair (e.g., a signature key pair) generated using public-key cryptography (e.g., RSA).

In some cases, preventing the receive-only region from transmitting the public key of the receive-only region to the first region may prevent the first region from verifying the digital signature of packages created at the receive-only region. Accordingly, by providing access to packages created in other regions only upon verifying the digital signature of the packages created in other regions, access to packages may be controlled by preventing transmission of a public key of a respective region. More specifically, preventing the receive-only region from transmitting the public key of the receive-only region to the first region may prevent the first region from verifying the digital signature of packages (e.g., the second package) from the receive-only region, and thereby prevent packages from the receive-only region from being replicated to and imported by the first region.

Preventing the receive-only region from replicating the second package to the first region may include preventing the receive-only region from replicating software packages to any other region of the plurality of regions. Preventing the receive-only region from replicating the second package to the first region may have the advantage of providing more flexibility and control over package replication between regions of the plurality of regions. Such flexibility and control might not be possible with a centralized approach to package replication and/or publication.

The plurality of regions may comprise a third region. The replicating may comprise creating a third package in the third region. The method may further comprise replicating the third package from the third region to the first region.

The method may further comprise obtaining a public key of the first region at the second region. The public key of the first region may correspond to the private key of the first region. Replicating the first package from the first region to the second region may comprise providing access to the first package at the second region via the public key and/or verifying the digital signature of the first package via the public key of the first region.

For example, during a setup stage of the first region, a public-private key pair of the first region may be generated. A public key of the public-private key pair of the first region may be transmitted to one or more regions of the plurality of regions that are authorized to receive packages from the first region.

The public-key of the first region and the private key of the first region may be part of a key pair (e.g., a signature key pair) generated using public-key cryptography.

Providing access to the first package (e.g., at the second region) via the public key of the first region may comprise allowing access to the first package at the second region only after verifying the digital signature of the first package, e.g., by using the public key of the first region. For example, package management software of the second region may be configured to deny access to the first package unless the digital signature of the first package can be verified. Accordingly, unless the second region has been provided with the public key of the first region, it would not be possible to access the first package at the second region.

In this way, the public key of the first region may be used to restrict access to packages from the first region by ensuring that only other regions that are authorized to access packages from the first region are provided with the public key of the first region.

The at least one binary file may include a software application (e.g., a bot, automated bot or software agent). The software application may carry out one or more automation and/or communication tasks. The one or more automation (e.g., communication) tasks may comprise at least one of the following: parsing a file to extract data, uploading data, downloading data, interacting with an application programming interface, creating a file that conforms to a template, sending an email to a specified address, storing a file at a specified location. Other automation tasks are also possible.

In some cases, the software application is not directly invoked but activates itself. For example, the software application may reside in a wait status (e.g., a standby mode) on a computing device and may become active (e.g., enter an active mode, an operation mode or a run status) based on a specified trigger or condition (e.g., a specified application on the computing device is opened or a specified task in the specified application is carried out). The software application might not require any user interaction, e.g., the software application might not be executed on demand but may run continuously (e.g., in the wait status) and activate itself based on the specified trigger in order to carry out the automation tasks. The software application may be autonomous or semiautonomous in the sense that the software application may determine one or more of the following: what tasks to carry out, a priority of the tasks and a goal to be achieved. The software application may determine a context or status of the computing device (e.g., the specified trigger in combination with a time, a date, and/or a load of or amount of computational work being carried out by the computing device) and may react to the context of the computing device.

The one or more automation tasks may be carried out, at least in part, on an enterprise resource planning (ERP) system. The application programming interface may enable interaction with the enterprise resource planning system. The enterprise resource planning system may have one or more of the following characteristics: near real time operation, one or more software applications, a database that supports the software applications, a user interface. The ERP system may be on premises, in a cloud computing environment, or provided according to a software as a service model.

Cloud computing is a model of service delivery for enabling on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service.

A cloud computing environment (i.e., cloud environment or cloud) may have one or more of the following characteristics: scalability, multitenancy, performance monitoring, virtual resources that are dynamically assignable to different users according to demand, multiple redundant sites, multiple virtual machines, as well as network accessibility (e.g., via. the Internet) from multiple locations (e.g., via a web browser) and devices (e.g., mobile device or PC).

In comparison to an on-premises computing environment, the cloud computing environment may have a higher ratio of virtual resources to physical resources (e.g., a higher ratio of virtual machines to physical machines). For example, the ratio of virtual resources (e.g., machines) to physical resources may be at least 10:1, at least 20:1 or at least 30:1 in the cloud computing environment. In contrast, an on-premises computing environment may have less than four virtual resources (e.g., machines) per physical resource.

The cloud computing environment may include public cloud infrastructure and/or private cloud infrastructure.

Public cloud (computing) infrastructure may involve sharing hardware, storage and/or network resources among multiple organizations or tenants. Services and/or applications may be accessed and managed using a web browser. Private cloud (computing) infrastructure may include resources exclusively used by one organization or group of users. In comparison to public cloud computing infrastructure, private cloud infrastructure may provide more flexibility and control, however, private cloud infrastructure may be more expensive. In both cases, public and private cloud computing infrastructure may be hosted by a service provider, e.g., Microsoft (Azure), Amazon (AWS) or SAP Business Technology Platform. Cloud-based storage (i.e., cloud-based storage services) may include one or more of Amazon S3 Object Storage, Google Object Storage and Alibaba Cloud Object Storage Service (OSS).

In some cases (e.g., when provided according to the software as a service model) the ERP system may comprise centrally hosted software provided on demand and/or via the World Wide Web. The ERP system may be multitenant, e.g., such that a single configuration (hardware, computer network, operating system) is provided for all users (e.g., tenants) of the ERP system. The ERP system may use virtualization, e.g., hardware virtualization in which multiple virtual machines are separated from underlying hardware resources and each virtual machine can be interacted in a way that is consistent with interaction with a computer and an operating system.

Replicating the first package from the first region to the second region may comprise copying the at least one binary file and the manifest from the first region to the second region.

More specifically, replicating the first package from the first region to the second region may comprise using the manifest of the first package to create an entry for the first package in a database of the second region and/or using the manifest of the first package to update a search index of the second region to include the first package.

Replicating the first package from the first region to the second region may comprise writing the first package to a storage (e.g., an object and/or file storage) of the second region. Replicating the first package from the first region to the second region may comprise scanning the at least one binary file of the first package for malware at the second region. The replicating may further comprise marking the first package as available on the second region.

Replicating the first package from the first region to the second region may be carried out by means of one or more scheduled jobs. A first job of the one or more scheduled jobs may include replicating the manifest from the first region to the second region. More specifically, the first job of the one or more scheduled jobs may include replicating the metadata of the first package from the first region to the second region, wherein the metadata of the first package includes the manifest of the first package (i.e., the manifest for the at least one binary file of the first package). A second job of the one or more scheduled jobs may include replicating the at least one binary file from the first region to the second region.

Replicating the first package from the first region to the second region may further comprise replicating a plurality of packages of the first region or all of the packages of the first region to the second region. Replicating all of the packages from the first region to the second region may be carried out, for example, if the second region has been recently established.

Replicating the first package in two jobs, as described above, may have advantages, particularly with regard to robustness, performance and security. Specifically, the at least one binary file may be relatively large, e.g., up to 1 Gigabyte (GB). Accordingly, replicating the first package (or the plurality of packages) in two jobs may help reduce the amount of data that needs to be replicated in a single replication call (i.e., network data transfer).

Hence, replicating the first package and the manifest in one job (rather than two jobs) might lead to the result that the replication is more time consuming, particularly because more data needs to be replicated. Moreover, carrying out the replicating in two jobs (rather than a single job) reduces the risk that the replicating will be interrupted; such an interruption could require the replication to be restarted from the beginning. The risks of time consuming replication and interruption of replication are especially acute if the plurality of packages of the first region or all of the packages of the first region are replicated to the second region.

Replicating in two jobs may facilitate resuming replication upon interruption (i.e., without needing to restart from the beginning) and/or the two jobs may facilitate conforming to a maximum file size limitation for files transferred between regions.

According to a second aspect, a computer program is provided. The computer program comprises instructions that, when the program is executed by a computer, cause the computer to carry out the method described above.

A (e.g., non-transitory) computer-readable medium may store the computer program. The computer program may be implemented as a computer program product.

According to a third aspect, a computer system for controlling access to and replication of packages is provided. The computer system comprises a plurality of regions, where each of the regions includes one or more computing devices. The computer system further comprises a computer network configured to communicatively connect the plurality of regions. At least one of the one or more computing devices of a first region of the plurality of regions is configured to create a first package, wherein the first package includes at least one binary file and a manifest for the at least one binary file. The at least one of the one or more computing devices is further configured to replicate, using the manifest, the first package from the first region to a second region of the plurality of regions. The replicating comprises using the manifest to determine dependencies of the binary file. At least one of the one or more computing devices of a second region of the plurality of regions is configured to publish the first package by making the at least one binary file of the first package available at the second region and displaying the contents of the at least one binary file according to the manifest at the second region.

The computer system may include or have access to a digital distribution platform, e.g., a decentralized digital distribution platform. In some cases, the first region may include or have access to the digital distribution platform. More generally, each region of the plurality of regions may include or have access to the digital distribution platform.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a non-transitory machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief Description of the Figures

Figure 1 shows operations of a computer implemented method for controlling access to and replication of packages according to some embodiments.
Figure 2 shows operations of the computer-implemented method for controlling access to and replication of packages according to some embodiments.
Figure 3 shows package replication among a plurality of regions according to some embodiments.
Figure 4 shows another example of package replication among the plurality of regions according to some embodiments.
Figure 5 shows yet another example of package replication according to some embodiments.
Figure 6 shows metadata that may be used for replication according to some embodiments.
Figure 7 shows a prior art approach for replicating packages.
Figure 8 shows a user interface for creating a package according to some embodiments.
Figure 9 shows a user interface for monitoring and controlling replication of packages.
Figure 10 shows a user interface for viewing published packages.
Figure 11 shows a description of at least one binary file produced according to a manifest.
Figure 12 shows a computer implemented method for controlling access to and replication of packages.
Figure 13 shows a general-purpose computer that may be used for implementing some embodiments.

### Detailed Description

In the following text, a detailed description of examples will be given with reference to the drawings. Various modifications to the examples may be made. In particular, one or more elements of one example may be combined and used in other examples to form new examples.

The user computers described in the present disclosure may be computing devices with corresponding features, unless otherwise indicated.

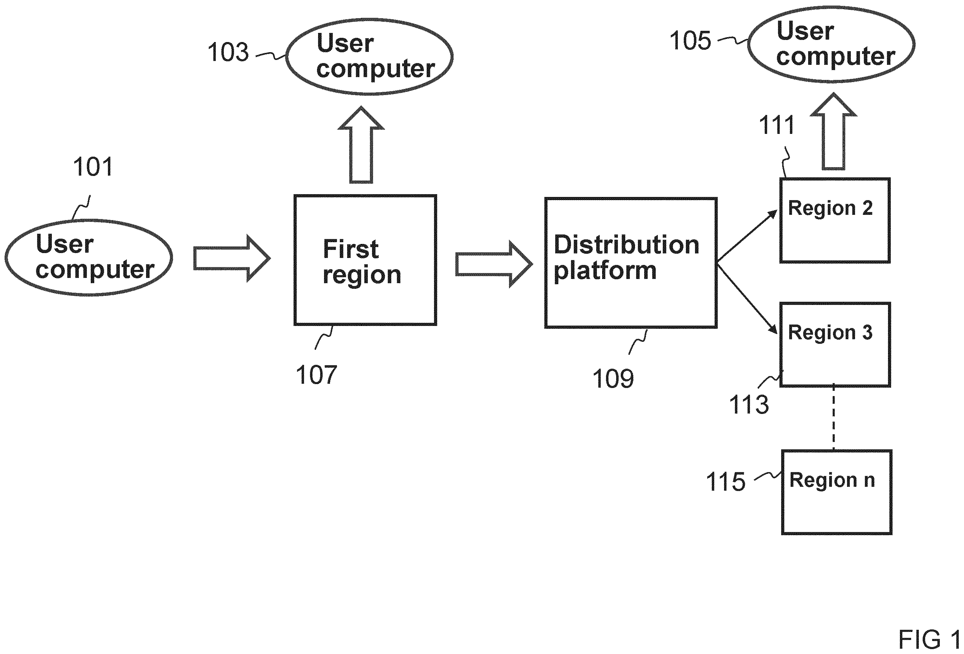

Figure 1 shows operations of a computer implemented method for controlling access to and replication of packages. Depicted are user computers 101, 103 and 105. The user computers 101, 103 and 105 may be referred to as computing devices. The user computers 101 and 103 may be computing devices of a first region 107 of a plurality of regions. A first package (see e.g., a first software package) may be created at a user computer 101 of the first region 107 and may be published to the first region 107. The first package includes at least one binary file and a manifest for the at least one binary file. The at least one binary file may include an archive file that supports archiving (e.g., collecting multiple files into a single file) and compression (e.g., encoding information using fewer bits than the original representation). For example, the at least one binary file may include a zip file.

The at least one binary file may include a software application capable of carrying out one or more automation tasks.

Publishing the first package to the first region 107 may include making the at least one binary file available at the first region 107 (e.g., providing an interface or API to access and/or download the at least one binary file from user computers 101 and 103 of the first region 107). Publishing the first package, e.g. to the first region 107, may make it possible to find the first package via a search using an interface, e.g., using a web browser. Accordingly, once the first package has been published, the first package may be visible (e.g., accessible and/or downloadable) to users along with other packages.

The first region 107 may include or have access to a distribution platform 109. The distribution platform 109 may be used to replicate, using the manifest of the first package, the first package from the first region 107 to other regions 111 to 115 of the plurality of regions. In some cases, each region of the plurality of regions may include or have access to a respective distribution platform.

The replicating comprises using the manifest to determine dependencies of the at least one binary file. For example, the other regions 111 to 115 may use the manifest to determine the dependencies of the at least one binary file. For each of the other regions 111 to 115, the dependencies of the at least one binary file may be determined and/or resolved (e.g., the dependencies may be retrieved from a repository) at the respective other region 111, 113 or one of the further regions 115 before publishing the first package at the respective other region 111, 113 or one of the further regions 115.

Accordingly, the first package may be published to a second region 111. After being published to the second region 111, the first package may be accessed (e.g., downloaded) by the user computer 105. The first package may be published to a third region 113. The publishing may include making the at least one binary file of the first package available at the third region 113 and displaying a description of the at least one binary file according to the manifest at the third region 113. In addition, the first package may be published to further regions 115 of the plurality of regions. The publishing may include making the at least one binary file of the first package available at a respective one of the further regions 115 of the of the plurality of regions and displaying a description of the at least one binary file according to the manifest at the respective one of the further regions 115.

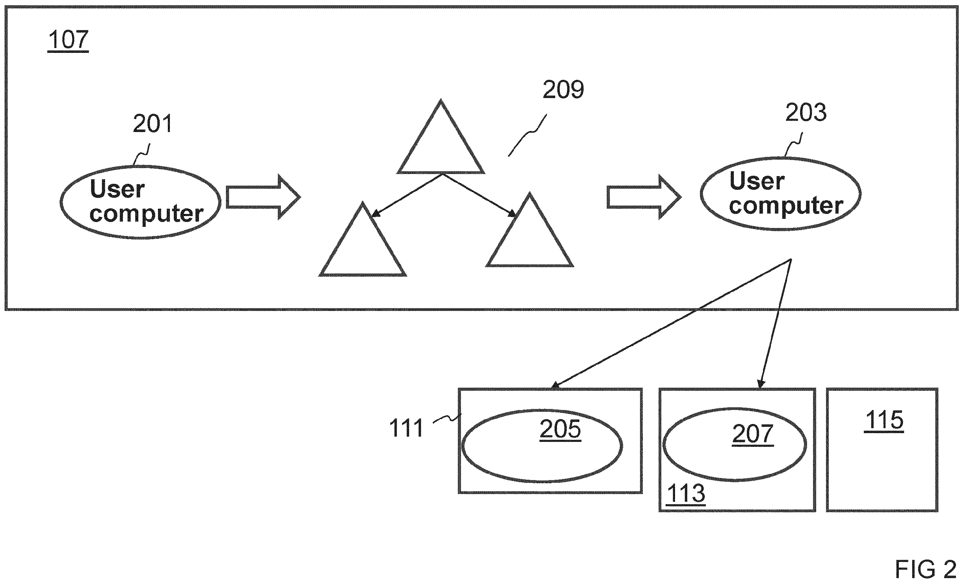

Figure 2 also shows operations of the method for controlling access to and replication of packages. Accordingly, the first region 107 may include user computers 201 and 203. Similarly, the second region 111 may include user computer 205 and the third region 113 may include user computer 207. At least one package 209 (e.g., including the first package) may be created at the user computer 201 and submitted to the user computer 203. At the user computer 203, it may be determined to replicate the package 209 to a subset (e.g., a proper subset) of the plurality of regions. For example, it may be determined to replicate the package 209 to the second region 111 and the third region 113 and not to replicate the package 209 to any of the further regions 115.

Access to the package 209 may be controlled by signing the package 209 using a digital signature. More specifically, a public/private key pair corresponding to the first region 107 may have been generated at the first region 107 and the package 209 may be signed using a private key of the public/private key pair. A public key of the public/private key pair may have been provided to the second region 111 and the third region 113 but not to any of the further regions 115. In this way, the second region 111 and the third region 113 may be able to access the package 209 but none of the further regions 115 will be able to access the package 209. More specifically, the further regions 115 will not be able to verify the digital signature of the package 209 and therefore, will not be able to access the package 209 via a respective package manager.

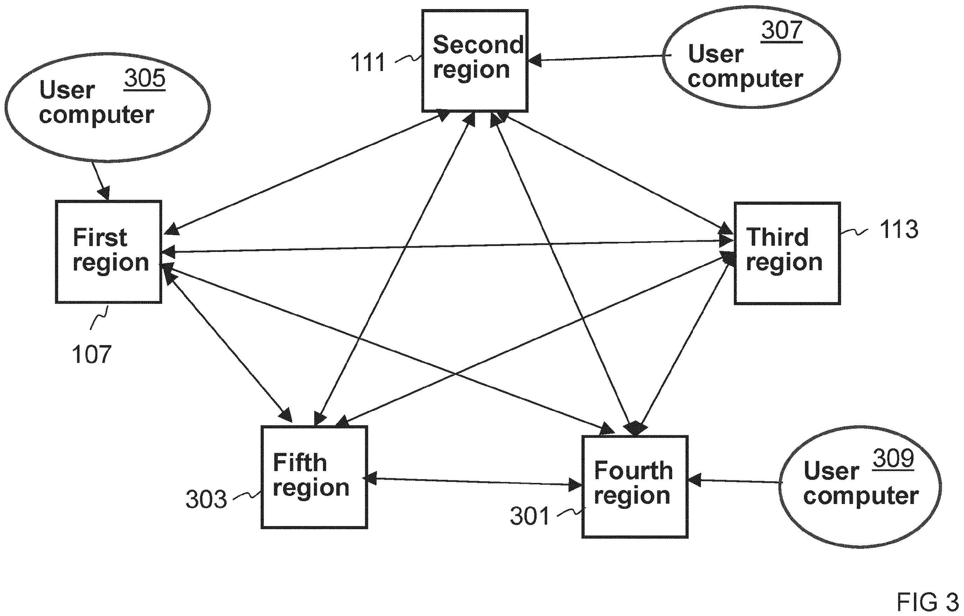

Figure 3 shows package replication among a plurality of regions. The plurality of regions may include the first region 107, the second region 111, the third region 113, a fourth region 301 and a fifth region 303. The fourth region 301 and the fifth region 303 may be among (i.e., included in) the further regions 115. The first region 107 includes a user computer 305, the second region 111 includes a user computer 307 and the fourth region 301 includes a user computer 309.

Each region of the plurality of regions may correspond to (e.g., may define) a geographical area. Each region may correspond to a continent and/or at least one country. For example, the first region 107 may correspond to Europe, the second region 111 may correspond to the United States, the third region 113 may correspond to Japan, the fourth region 301 may correspond to one or more countries in Southeast Asia (e.g., South Korea and/or Malaysia), the fifth region 303 may correspond to China. Hence, computing devices of a respective region of the plurality of regions may be physically located within the respective region of the plurality of regions.

The user computer 305 may create a package for the automatic creation of sales orders (e.g., from a spreadsheet) in the first region 107. The package for the automatic creation of sales orders may be published to the first region 107. The user computer 307 may create a package to create purchase requisitions (e.g., from a spreadsheet) in the second region 111. The package to create purchase requisitions may be published to the second region 111. The user computer 309 may create a package for supplier invoice file extraction from email and upload to an enterprise resource planning (ERP) system. The package for supplier invoice file extraction may be published to the fourth region 301.

According to the example, each of the depicted regions 107, 111, 113, 301, 303 may be able to replicate packages to every other depicted region 107, 111, 113, 301, 303. For example, the first region 107 may be able to replicate packages to the second region 111, the third region 113, the fourth region 301, and the fifth region 303. After replication, the packages may be published to the respective region.

For example, the package for the automatic creation of sales orders may be replicated from the first region 107 to the second region 111, the third region 113, the fourth region 301, and the fifth region 303. Accordingly, the package for the automatic creation of sales orders may be published to the second region 111, the third region 113, the fourth region 301, the fifth region 303. Each of the second region 111, the third region 113, the fourth region 301, and the fifth region 303 may receive the package for the automatic creation of sales orders including at least one binary file and a manifest for the at least one binary file. Each of the regions 111, 113, 301 and 303 may use a respective copy of the manifest of the package for the automatic creation of sales orders to determine the dependencies of the at least one binary file of the package for the automatic creation of sales orders.

Similarly, the package to create purchase requisitions may be replicated from the second region 111 to the first region 107, the third region 113, the fourth region 301, and the fifth region 303. Accordingly, the package to create purchase requisitions may be published to the first region 107, the third region 113, the fourth region 301 and the fifth region 303. Each of the first region 107, the third region 113, the fourth region 301 and the fifth region 303 may receive the package to create purchase requisitions including at least one binary file and a manifest for the at least one binary file. Each of the regions 107, 113, 301 and 303 may use a respective copy of the manifest for the package to create purchase requisitions to determine dependencies of the at least one binary file of the package to create purchase requisitions.

As yet another example, the package for supplier invoice file extraction from email and upload to the ERP system may be replicated from the fourth region 301 to the first region 107, the second region 111, the third region 113, and the fifth region 303. Accordingly, the package for supplier invoice file extraction from email and upload to the ERP system may be published to the first region 107, the second region 111, the third region 113, and the fifth region 303. Each of the first region 107, the second region 111, the third region 113, and the fifth region 303 may receive the package for supplier invoice file extraction from email and upload to the ERP system including at least one binary file and a manifest for the at least one binary file. Each of the regions 107, 111, 113 and 303 may use a respective copy of the manifest for the package for supplier invoice file extraction from email and upload to the ERP system to determine dependencies of the at least one binary file for the package for supplier invoice file extraction from email and upload the ERP system.

In this way, packages created at a computing device of one of the depicted regions may be replicated and published to every other one of the depicted regions. By means of the manifest each region may determine package dependencies and publish packages created at another region independently of the other region. For example, if network connectivity between the first region 107 and the second region 111 is lost, packages created in the first region 107 that have been replicated and published to the second region 111 can still be accessed in the second region 111, without needing to be able to connect to the first region 107.

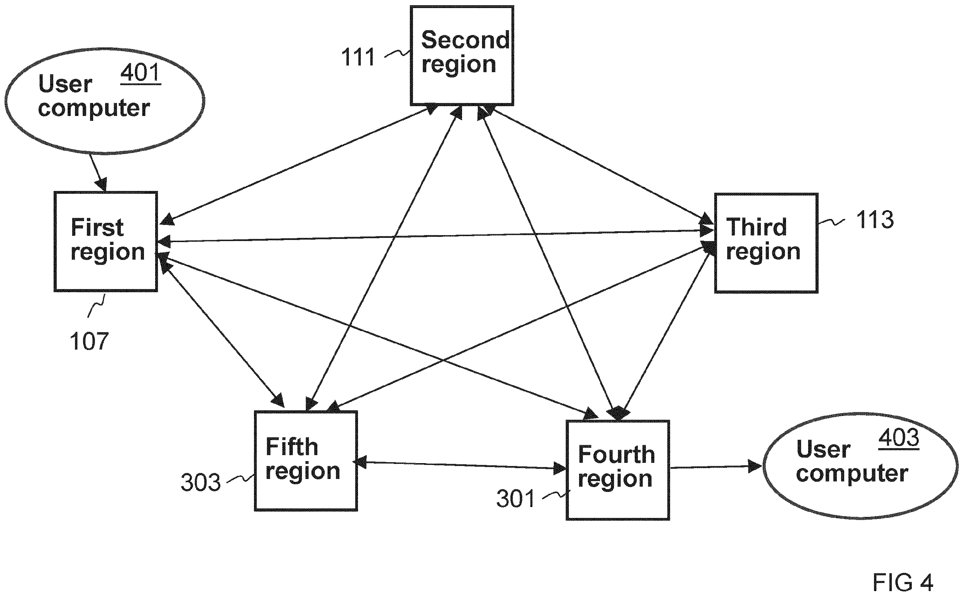

Figure 4 shows another example of package replication among the plurality of regions. According to the depicted example, a user computer 401 is one of the computing devices of the first region 107. A user computer 403 is a computing device of the fourth region 301. The user computer 401 may publish one or more packages (e.g., the first package) to the first region 107. The first package may be replicated from the first region 107 to further regions 111, 113, 301, 303 as described with respect to figure 3.

Accordingly, the first package may be published to the fourth region 301. The publishing comprises making the at least one binary file of the first package available at the fourth region 301 and displaying a description of the at least one binary file of the first package according to the manifest of the first package at the fourth region 301. The publication of the first package at the fourth region 301 may make it possible for the user computer 403 to download and use the first package at the user computer 403.

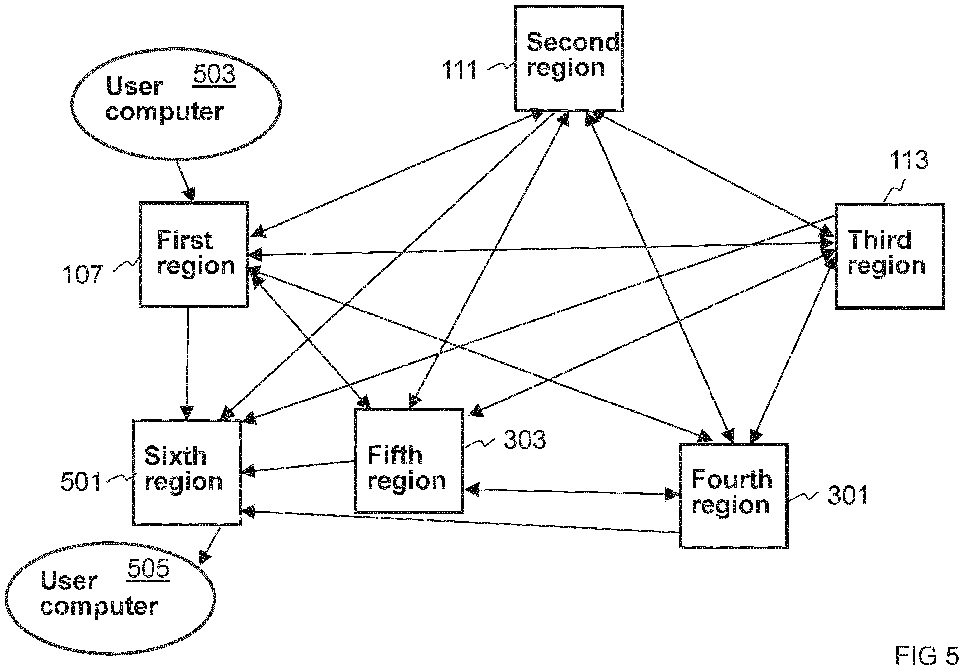

Figure 5 shows yet another example of package replication. In addition to the first region 107, the second region 111, the third region 113, the fourth region 301, and the fifth region 303, the plurality of regions includes a sixth region 501. According to the depicted example a user computer 503 is one of the computing devices of the first region 107. A user computer 505 is one of the computing devices of the sixth region 501. The sixth region 501 may be referred to as a receive-only region.

Replication and publication by the regions 107, 111, 113, 301, 303 may function substantially as described with respect to figure 3. The sixth region 501 may be prevented from replicating software packages to any other region of the plurality of regions. Hence, packages created in the sixth region 501, e.g., by the user computer 505, might only be published in the sixth region 501. The sixth region 501 may be prevented from replicating packages created by the user computer 505 by preventing the sixth region 501 from transmitting a respective public key of a package created in the sixth region 501. However, the first package created at the first region 107 may be replicated from the first region 107 to the sixth region 501. The manifest of the first package may be used to determine dependencies of the at least one binary file of the first package, as described above. Publishing the first package to the sixth region 501 may comprise making the at least one binary file of the first package available at the sixth region 501 and displaying a description of the at least one binary file according to the manifest of the first package at the sixth region 501.

Accordingly, the sixth region 501 may be able to receive packages created at other regions of the plurality of regions and publish those packages within the sixth region 501 without replicating packages created at the sixth region 501 to other regions of the plurality of regions. In this way, flexible and decentralized control of package replication is provided.

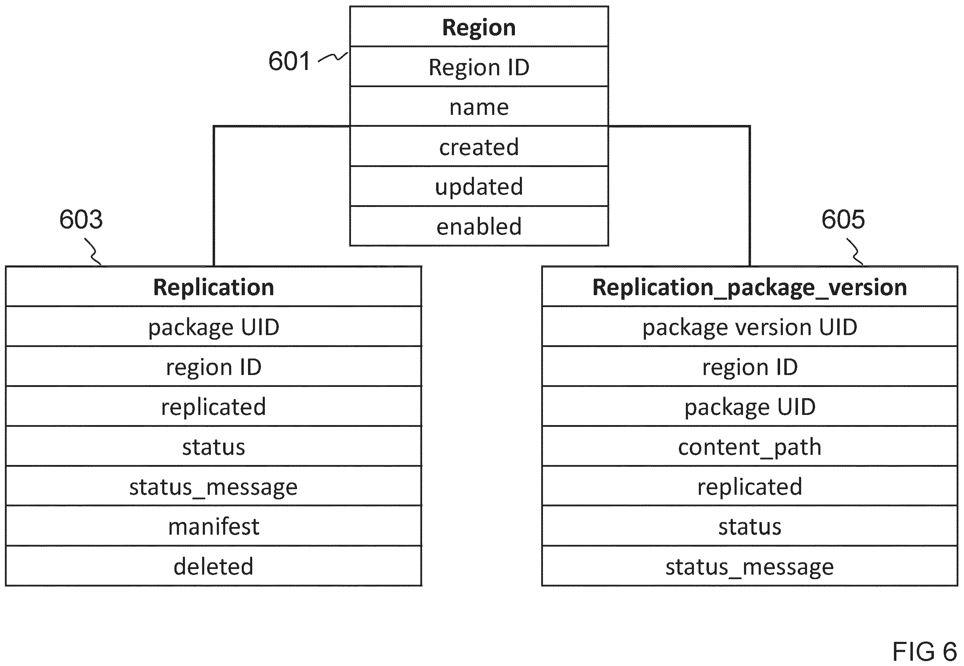

Figure 6 shows metadata that may be used to control and/or monitor replication of packages. Region metadata 601 may be used for each region (e.g., the first region 107). The region metadata 601 may indicate a region identifier, a name of the region, a creation timestamp of the region indicating when the region was established, an update timestamp of the region indicating when the name of the region was last updated and an indication of whether replication to or from the region enabled. The timestamps may enable a determination to be made regarding how long a configuration (e.g., a regional metadata configuration) has been in place. In the context of the present disclosure, a timestamp may be a sequence of characters or encoded information identifying when an event occurred. The timestamp may include a date (e.g., a year, a month, a day), a time of day (e.g., an hour and a minute), a second, a portion of a second, etc.

Replication metadata 603 may be provided for each respective package to be replicated. The replication metadata 603 a include a package identifier (i.e., a package unique identifier) to identify a respective package to be replicated (e.g., the first package), a region identifier of the region in which the package was created, of replicated timestamp indicating when replication was carried out (or attempted), a status of the replication (e.g., indicating success or failure of the replication), a status message (e.g., indicating a reason for failure of the replication), the manifest of the respective package and an indication of when or whether the package was deleted. The indication of when or whether a package was deleted may be used in the context of deprecating or deleting the package. Hence, replication metadata may be maintained even after a package is deleted from a region (e.g., the first region) where the package was created and used to replicate a deletion of the package to one or more other regions (e.g., including the second region) of the plurality of regions.

Replication package version metadata 605 may be provided for each respective package to be replicated. The replication package version metadata 605 may describe the at least one binary file of a respective package (e.g., the first package). More specifically, replication package version metadata 605 may be provided for each version of the at least one binary file of the respective package. For example, if there are three versions of the at least one binary file for the first package, there may be respective replication package version metadata for each of the three versions.

The replication package version metadata 605 may include a package version identifier (e.g., describing a version of the at least one binary file), a region identifier corresponding to (e.g., equivalent to) the region identifier of the replication metadata 603, an package identifier corresponding to (e.g., equivalent to) the package identifier of the replication metadata 603. The replication package version metadata 605 may further include a content path, a replicated timestamp indicating when replication was carried out (or attempted), a status of the replication (e.g., indicating success or failure of the replication), and a status message (e.g., indicating a reason for failure of the replication).

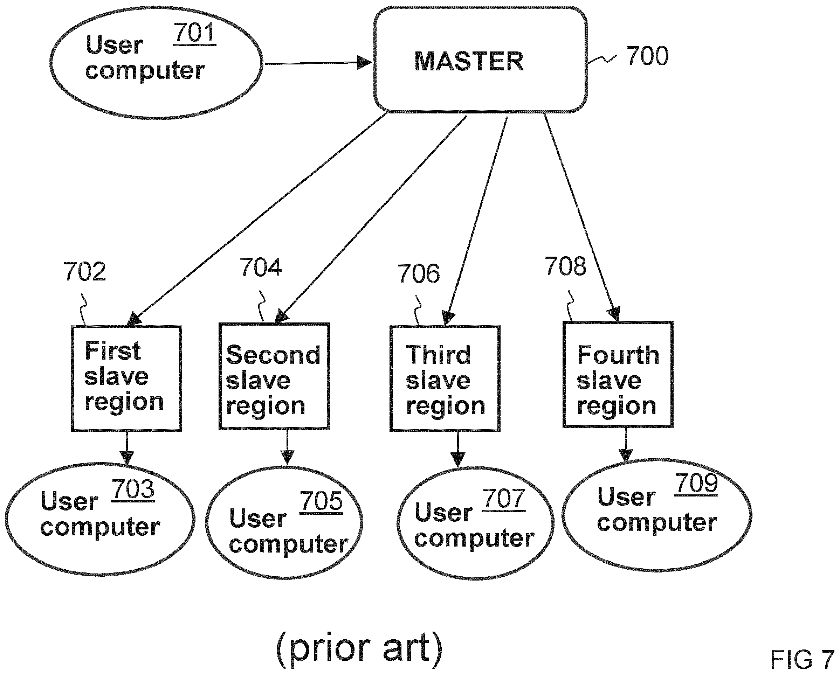

Figure 7 shows a conventional centralized approach for package replication. According to the conventional approach, packages may be distributed from a central distribution platform 700 to slave regions 702, 704, 706 and 708. A user computer 701 may be communicatively connected to the central distribution platform 700 in order to publish a respective package to the central distribution platform 700.

A user computer 703 in the first slave region 702 may obtain the respective package from the central distribution platform 700. Alternatively, a mirror copy of the packages provided by the central distribution platform 700 may be obtained from the central distribution platform 700 at the first slave region 702 and the user computer 703 may obtain the respective package from the mirror copy (e.g., the user computer 703 may obtain the mirror copy as well as the respective package or another computing device of the first slave region 702 may obtain the mirror copy and the user computer 703 may obtain the respective package from the other computing device). More generally, a respective mirror copy of the packages provided by the central distribution platform 700 may be obtained from the central distribution platform 700 and provided to each of the first slave region 702, the second slave region 704, the third slave region 706 and the fourth slave region 708.

Moreover, a user computer 705 in the second slave region 704 may obtain the respective package from the central distribution platform 700 or from a respective mirror copy of the second slave region 704. Further similarly, a user computer 707 in the third slave region 706 may obtain the respective package from the central distribution platform or from a respective mirror copy of the third slave region 706. In addition, a user computer 709 in the fourth slave region 708 may obtain the respective package from the central distribution platform 700 or from a respective mirror copy of the fourth slave region 708.

Each of the slave regions 702, 704, 706 and 708 may contain the same packages as the other slave regions. Use of a central distribution platform and/or mirror copies at each of the regions may limit control and flexibility with regard to replication of packages.

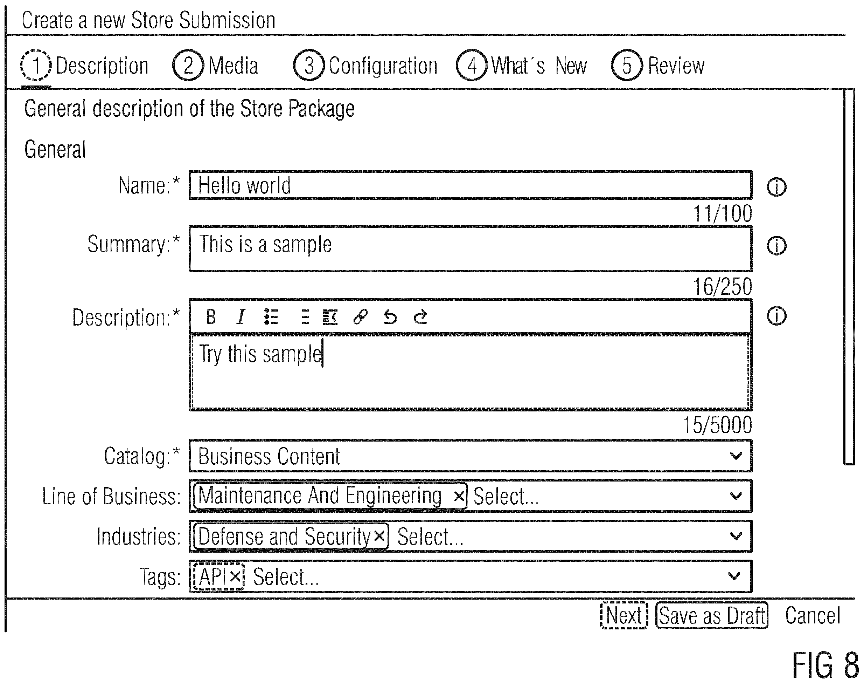

Figure 8 shows a user interface for creating a package (e.g., the first package). Accordingly, the user interface may receive user input providing a package name of a respective package, a summary of tasks carried out by the respective package and a more detailed description of tasks carried out by the respective package. In addition, the user interface may receive user input specifying a category of the respective package, areas in which the respective package might be useful and keywords (e.g., tags) associated with the respective package.

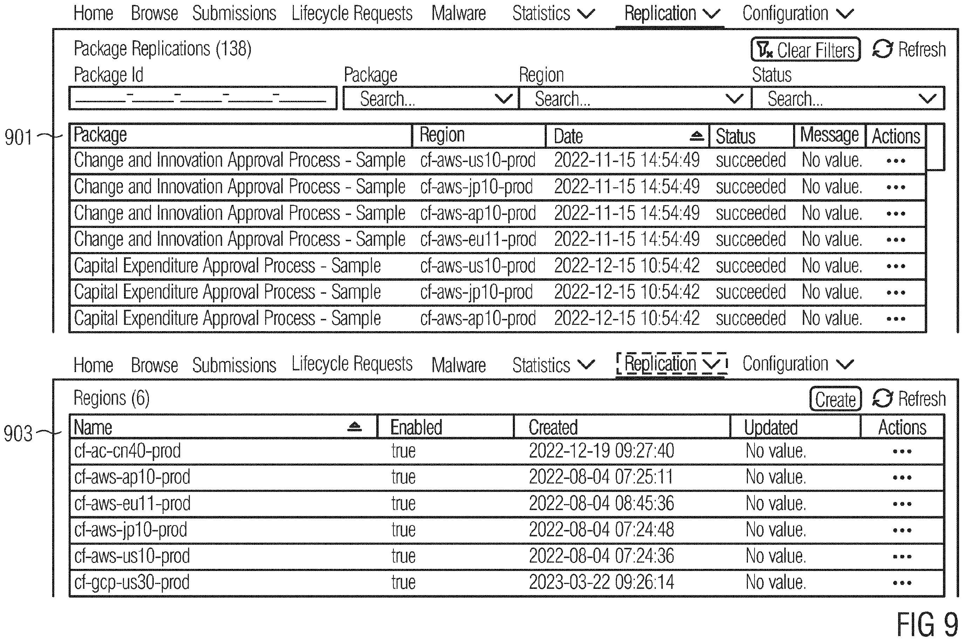

Figure 9 shows a user interface 901 for monitoring and controlling replication of packages. The user interface 901 may include a package column to identify respective packages, a region column to identify respective regions to which the identified packages have been replicated, a replicated timestamp column showing a timestamp of replication or attempted replication, a status column showing a status of the replication (e.g., "succeeded" or "failed"), a message column showing a message associated with the status (e.g., a reason for failure of replication) and in actions column which can be interacted with in order to perform actions associated with replication of the identified package. The user interface 901 may be populated using the replication metadata 603.

Figure 9 also shows a user interface 903 for monitoring and controlling application of packages. The user interface 903 may be populated using the region metadata 601. The user interface 903 may include a region column to identify respective regions, and enabled column indicating whether replication to the identified region is enabled, a created column indicating when the identified region was created, and updated column indicating when the identified region was updated and an actions column to perform actions associated with replication to the identified region.

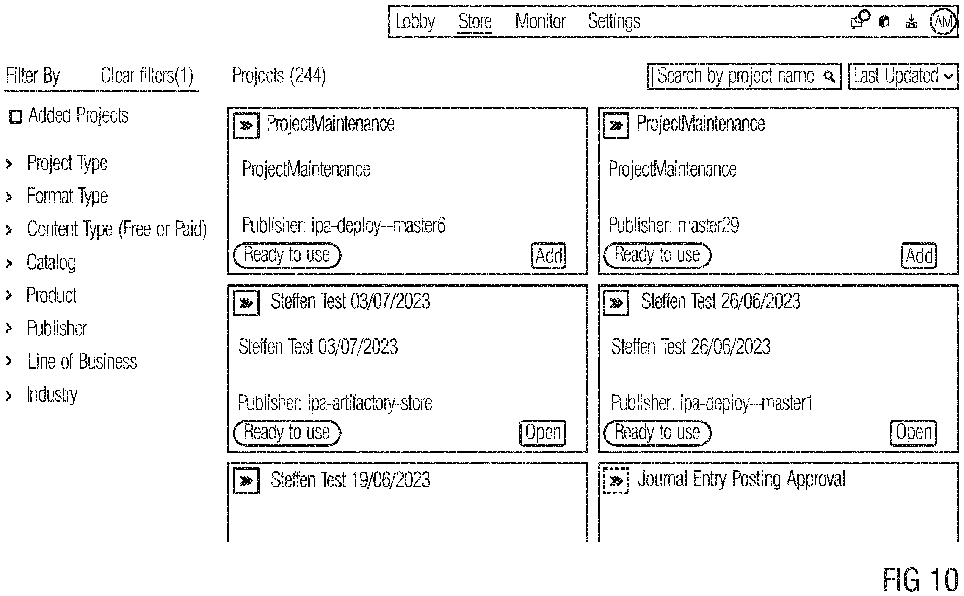

Figure 10 shows a user interface that can be accessed from a computing device of a region in order to browse and obtain published packages (e.g., packages made available for download) of that region. Advantageously, each region of the plurality of regions may provide computing devices within the respective region with the same user interface available to other regions of the plurality of regions. In this way computing devices within each region may have a consistent way of obtaining available packages.

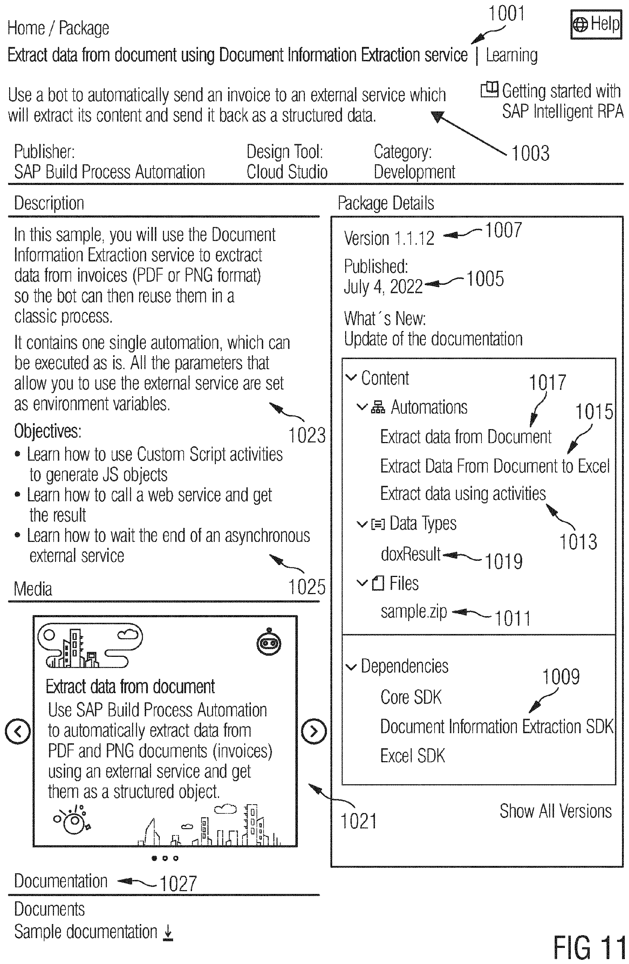

Figure 11 shows a description of an exemplary at least one binary file produced according to an exemplary manifest. The exemplary at least one binary file and the exemplary manifest may be part of an exemplary package. In other words, figure 11 shows a result of displaying a description of the exemplary at least one binary file according to the exemplary manifest.

As shown in figure 11, the description of the exemplary at least one binary file may include a package name 1001, a short description 1003, a creation date 1005, a version 1007, dependencies 1009, a filename 1011, task names 1013 to 1017, and an output datatype 1019.

Listings 1 to 3 below show parts of the exemplary manifest used to produce the description of the exemplary at least one binary file. In listings 1 to 3 the exemplary manifest is in a data serialization format; more specifically, the data serialization format is JSON. The derivation of the description of the exemplary at least one binary file from the exemplary manifest and is described with respect to Listings 1 to 3 below.

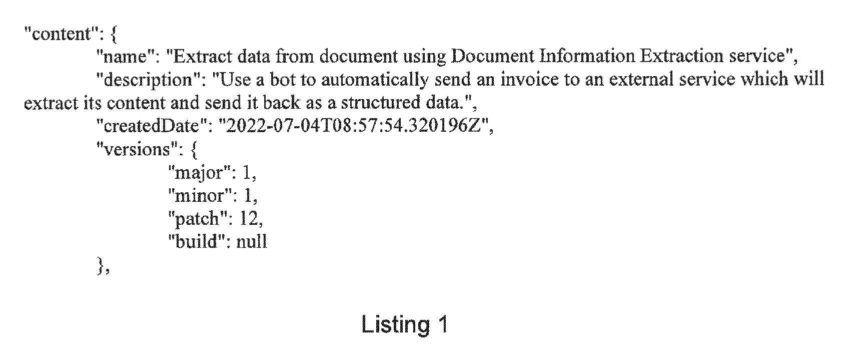

As shown in figure 11, listing 1 includes the package name 1001, the short description 1003, the creation date 1005, and the version 1007. The version 1007 is 1.1.12, i.e., major version 1, minor version 1, patch 12.

```
"dependencies": [
      {
         "packageUid": "7eeebf51-8d31-418b-be79-d5ba7a68987d",
        "packageVersionUid":"f7d168bd-4f42-4f30-a093-fcf3b8f97d77",
        "packageName": "Document Information Extraction SDK",
        "dependencies": [
           {
              "packageUid": "2dbcfd22- 5 8ea-49a2-99d6-00 5f5b b902c3",
              "packageVersionUid": "afb721da-53c2-41b8-b4c9-73a58298583e",
              "packageName": "SAP Intelligent RPA Core SDK"
           },
           {
              "packageUid": "2940834f-ef37-4eel-9845-d6b8d370fdd6",
              "packageVersionUid": "723d0d4c-cd84-4abe-8e50-79c7d113a291",
              "packageName": "SAP Intelligent RPA PDF SDK",
              "dependencies": [
                {
                     "packageUid": "2dbcfd22-58ea-49a2-99d6-005f5bb902c3",
                     "packageVersionUid": "afb721da-53c2-41b8-b4c9-73a58298583e",
                     "packageName": "SAP Intelligent RPA Core SDK"
                }
              ]
            }
        ]
   },
   {
        "packageUid": "2dbcfd22-58ea-49a2-99d6-005f5bb902c3",
        "packageVersionUid": "afb721da-53c2-41b8-b4c9-73a58298583e",
        "packageName": "SAP Intelligent RPA Core SDK"
      },
      {
        "packageUid": "105f6259-cdaf-414b-86ea-5bc670448046",
        "packageVersionUid": "641fee2c-49dc-4512-9789-ca80cd9d0917",
        "packageName": "SAP Intelligent RPA Excel SDK",
        "dependencies": [
           {
              "packageUid": "2dbcfd22-58ea-49a2-99d6-005f5bb902c3",
              "packageVersionUid": "afb721da-53c2-41b8-b4c9-73a58298583e",
              "packageName": "SAP Intelligent RPA Core SDK"
           }
        ]
   }
], 
```

### Listing 2

Listing 2 includes the dependencies 1009 of the exemplary package, i.e., dependencies of the exemplary at least one binary file. More specifically, listing 2 lists direct and indirect dependencies of the exemplary at least one binary file. The SAP intelligent robotic process automation (RPA) core software development kit (SDK) is required by other dependencies and hence appears five times in listing 2. Listing 2 includes the following direct dependencies: document information extraction SDK, SAP intelligent RPA core SDK, and SAP intelligent RPA Excel SDK. Listing 2 further includes the following indirect dependencies: SAP intelligent RPA core SDK, SAP intelligent RPA PDF SDK. Each dependency is listed with a package unique identifier, a package version unique identifier, and an package name.

Accordingly, after eliminating redundancies (e.g., redundant indirect dependencies), the exemplary at least one binary file includes the dependencies 1009, i.e., three dependencies.

```
      artifacts": {
             "file": [
                    {
                            "name": "sample.zip",
                           "description": "Sample used to execute this automation",
                           "activated": true
                    }
       ],
             "automation": [
                    {
                           "name": "Extract data using activities",
                           "activated": true
                    },
                    {
                           "name": "Extract Data From Document to Excel",
                           "description": "An automation that extracts data from document and
                           updates in Excel",
                           "activated": true
                    },
                    {
                           "name": "Extract data from Document",
                           "activated": true
                    }
       ],
             "datatype": [
                    {
                           "name": "doxResult",
                           "activated": true
                    }
       ]
  }
```

### Listing 3

Listing 3 identifies the exemplary at least one binary file via the filename 1011 (i.e., "sample.zip"), a file description (i.e., "Sample used to execute this automation") and an activation status (i.e., "activated": true).

The tasks or automations that can be performed by the at least one binary file are also provided in listing 3. A first task has a task name 1013, "Extract data using activities" and an activation status of true. A second task has a task name 1015, "Extract Data From Document to Excel" and a task description, "an automation that extracts data from document and updates in Excel". A third task has a task name 1017, "Extract data from document" and an activation status of true. Listing 3 also specifies the output datatype 1019 of the at least one binary file, i.e., doxResult.

Accordingly, the exemplary manifest provides a concise description of how to use the at least one binary file, what can be done with the at least one binary file and what is needed by the at least one binary file.

The at least one binary file may include one or more of the following: media 1021, a detailed description 1023, objectives 1025 and documentation 1027, as further shown in figure 11.

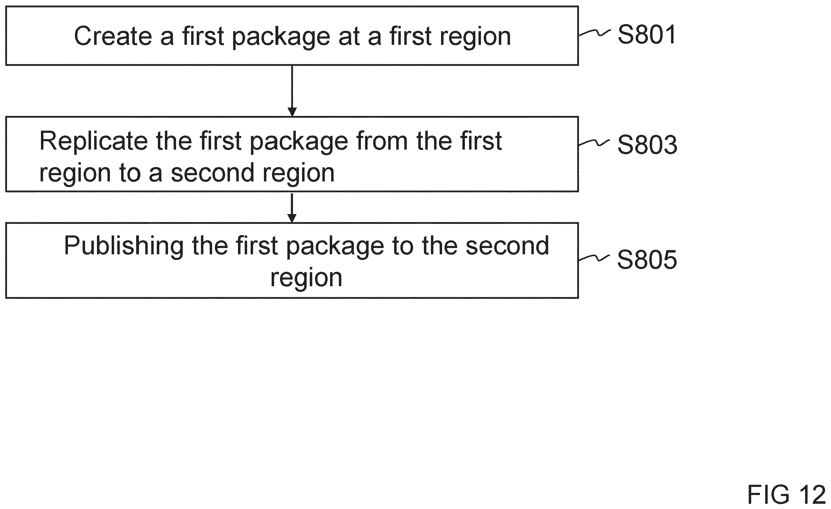

Figure 12 shows steps of a computer implemented method for controlling access to and replication of packages.

At step S801, the method comprises creating a first package at a first region of a plurality of regions. The plurality of regions is communicatively connected via a computer network. The first package includes at least one binary file and a manifest for the at least one binary file.

At step S803, the method further comprises replicating, using the manifest, the first package from the first region to a second region of the plurality of regions. The replicating comprises using the manifest to determine dependencies of the at least one binary file.

At step S805, the method further comprises publishing the first package to the second region. The publishing comprising making the at least one binary file of the first package available at the second region and displaying a description of the at least one binary file according to the manifest at the second region.

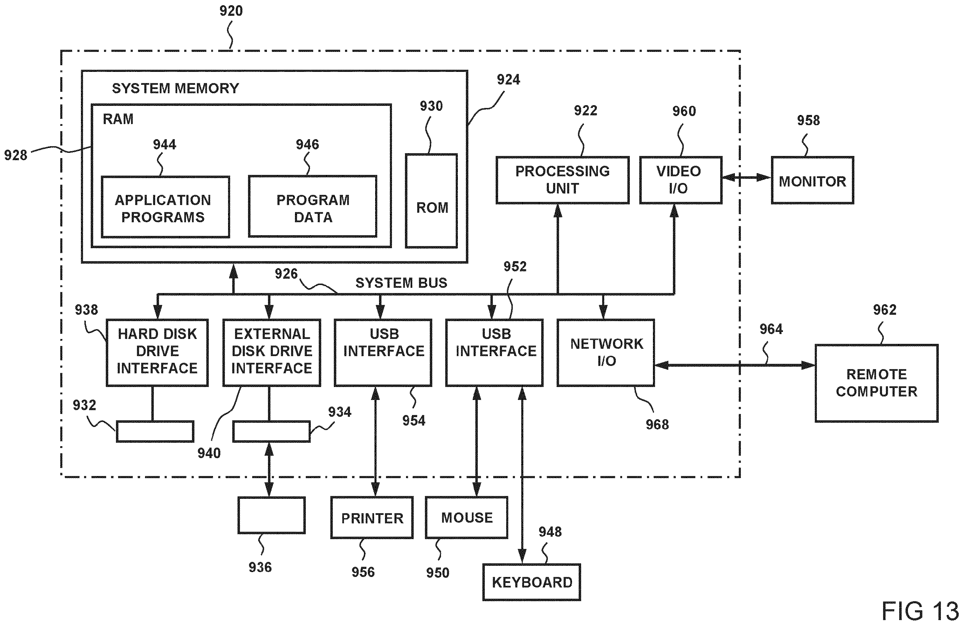

Figure 13 shows an exemplary system for implementing the claimed subject matter including a general-purpose computing device in the form of a computing environment 920 (e.g. a personal computer). The computing environment 920 includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and non-volatile memory, such as a random-access memory (RAM) 928 and a read only memory (ROM) 930. A basic input/output system (BIOS) containing the basic routines that helps to transfer information between elements within the computing environment 920, such as during start-up, may be stored in the ROM 930. The system bus 926 may be any of several types of bus structures including a memory bus or memory controller, a peripheral bus, and a local bus using any of a variety of bus architectures.

The computing environment 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD-ROM for an optical disk drive. The hard disk drive 932 and the external disk drive 934 are connected to the system bus 926 by a hard disk drive interface 938 and an external disk drive interface 940, respectively. The drives and their associated computer-readable media provide non-volatile storage of computer readable instructions, data structures, program modules and other data for the computing environment 920. The data structures may include relevant data for the implementation of the method for controlling access to and replication of packages. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more programs 944, other program modules (not shown), and program data 946. The application programs may include at least a part of the functionality as depicted in Figure 12.

A user may enter commands and information, as discussed below, into the computing environment 920 through input devices such as keyboard 948 and mouse 950. Other input devices (not shown) may include a microphone (or other sensors), joystick, game pad, scanner, or the like. These and other input devices may be connected to the processing unit 922 through a universal serial bus (USB) interface 952 that is coupled to the system bus 926, or may be collected by other interfaces, such as a USB interface 954, game port, a serial port, or a parallel port. Further, information may be printed using printer 956. The printer 956, and other parallel input/output devices may be connected to the processing unit 922 through USB interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computing environment 920 may operate in a networked environment using connections to one or more electronic devices. Figure 13 depicts the computing environment 920 networked with remote computer 962. The remote computer 962 may be another computing environment such as a server, a router, a network PC, a peer device or other common network node, and may include many or all of the elements described above relative to the computing environment 920. The logical connections depicted in figure 13 include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. In a networked environment, program modules depicted relative to the computing environment 920, or portions thereof, may be stored in a remote memory storage device resident on or accessible to remote computer 962. Furthermore, other data relevant to the computer system for controlling access to and replication of packages (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for controlling access to and replication of packages.

## Claims

1. A computer-implemented method for controlling access to and replication of packages, comprising:
creating (S801) a first package at a first region (107) of a plurality of regions, wherein the plurality of regions is communicatively connected via a computer network,
wherein the first package includes at least one binary file and a manifest for the at least one binary file;
replicating (S803), using the manifest, the first package from the first region (107) to a second region (111) of the plurality of regions, the replicating comprising using the manifest to determine dependencies of the at least one binary file;
publishing (S805) the first package to the second region (111), the publishing comprising making the at least one binary file of the first package available at the second region (111) and displaying a description of the at least one binary file according to the manifest at the second region (111).

2. The method of claim 1, wherein each of the plurality of regions includes one or more computing devices,
wherein the one or more computing devices include at least one of the following: a server, a client, a database,
wherein the computer network is a wide area network and/or a peer-to-peer network.

3. The method of claim 1 or 2, wherein the at least one binary file includes non-printable characters, wherein the at least one binary file includes an archive file or a compressed file,
wherein the manifest is in a data serialization format,
wherein the data serialization format is JSON, PHP serialization format or XML.

4. The method of any one of the preceding claims, wherein the manifest comprises a plurality of dependencies of the first package, wherein the plurality of dependencies may comprise one or more direct dependencies of the first package and/or one or more indirect dependencies of the first package.

5. The method of any one of the preceding claims, wherein the replicating comprises digitally signing the first package using a digital signature.

6. The method of claim 5, wherein digitally signing the first package comprises signing the first package using a private key of the first region (107).

7. The method of any one of the preceding claims, wherein the plurality of regions comprises a receive-only region (501),
wherein the method further comprises:
creating a second package at the receive-only region (501);
digitally signing the second package using a private key of the receive-only region (501); and
preventing the receive-only region (501) from replicating the second package to the first region (107).

8. The method of claim 7, wherein preventing the receive-only region (501) from replicating the second package to the first region (107) comprises preventing the receive-only region (501) from transmitting a public key of the receive-only region (501) to the first region (107), wherein the public key of the receive-only region (501) corresponds to the private key of the receive-only region (501).

9. The method of any one of claims 6 to 8, further comprising:
obtaining a public key of the first region (107) at the second region (111), wherein the public key of the first region (107) corresponds to the private key of the first region (107),
wherein replicating the first package from the first region (107) to the second region (111) comprises providing access to the first package at the second region (111) via the public key of the first region and/or verifying the digital signature of the first package via the public key of the first region (107),
wherein providing access to the first package via the public key of the first region (107) may comprise allowing access to the first package only after verifying the digital signature of the first package.

10. The method of any one of the preceding claims, wherein the at least one binary file includes a software application, wherein the software application carries out one or more automation tasks,
wherein the one or more automation tasks comprise at least one of the following: parsing a file to extract data, uploading, downloading, interacting with an application programming interface, creating a file that conforms to a template, sending an email to a specified address, storing a file at a specified location.

11. The method of claim 10, wherein the one or more automation tasks are carried out, at least in part, on an enterprise resource planning system,
wherein the application programming interface enables interaction with the enterprise resource planning system.

12. The method of any one of the preceding claims, wherein replicating the first package from the first region (107) to the second region (111) comprises copying the at least one binary file and the manifest from the first region (107) to the second region (111).

13. The method of any one of the preceding claims, wherein replicating the first package from the first region (107) to the second region (111) is carried out by means of one or more scheduled jobs,
wherein a first job of the one or more scheduled jobs includes replicating the manifest from the first region (107) to the second region (111),
wherein a second job of the one or more scheduled jobs includes replicating the at least one binary file from the first region (107) to the second region (111).

14. A computer program comprising instructions that, when the program is executed by a computer, cause the computer to carry out the method of any one of the preceding claims.

15. A computer system for controlling access to and replication of packages, comprising:
a plurality of regions, wherein each of the regions includes one or more computing devices;
a computer network configured to communicatively connect the plurality of regions;
wherein at least one of the one or more computing devices of a first region (107) of the plurality of regions is configured to:
create a first package, wherein the first package includes at least one binary file and a manifest for the at least one binary file;
replicate, using the manifest, the first package from the first region (107) to a second region (111) of the plurality of regions, the replicating comprising using the manifest to determine dependencies of the binary file;
wherein at least one of the one or more computing devices of a second region (111) of the plurality of regions is configured to:
publish the first package by making the at least one binary file of the first package available at the second region (111) and displaying a description of the at least one binary file according to the manifest at the second region (111).
